# EUROPEAN PATENT SPECIFICATION

(11) **EP 3 454 716 B1**
(45) Date of publication and mention of the grant of the patent: **08.01.2020**
(21) Application number: 16722857.6
(22) Date of filing: 09.05.2016
(51) Int. Cl.: A47L 15/42, D06F 37/26

(54) **A HOUSEHOLD APPLIANCE HAVING A TUB MADE OF A COMPOSITE MATERIAL AND A PROCESS FOR PRODUCING SUCH TUB**
HAUSHALTSGERÄT MIT EINEM AUS EINEM VERBUNDSTOFFMATERIAL HERGESTELLTEN BEHÄLTER UND VERFAHREN ZUR HERSTELLUNG SOLCH EINES BEHÄLTERS
APPAREIL ÉLECTROMÉNAGER AYANT UNE CUVE CONSTITUÉE DE MATÉRIAU COMPOSITE, ET PROCÉDÉ DE PRODUCTION D'UNE TELLE CUVE

(43) Date of publication of application: 20.03.2019
(73) Proprietor: Arçelik Anonim Sirketi, 34445 Istanbul (TR)
(72) Inventor: KAYMAKCI, Orkun, 34950 Istanbul (TR); KIRAZ, Hulya, 34950 Istanbul (TR); KILIC, Umut, 34950 Istanbul (TR); SALMAN, Eren, 34950 Istanbul (TR); OZPERK, Elif, 34950 Istanbul (TR)
(86) International application number: PCT/EP2016/060321
(87) International publication number: WO 2017/194087

(56) References cited:
- US-A1- 2004 123 633
- US-A1- 2015 197 881
- US-B1- 6 435 366

## Description

The present invention relates to a household appliance having a tub made of a composite material, such as a washer or a dryer, and to a process for producing such tub. More in detail the present invention refers in particular to a washing machine or to a washer/dryer comprising a tub made of a composite material having a polymer matrix and to a process for its production.

In the state of the art household appliances having a tub made of a composite material, such as dishwashers, washing and/or drying machines, are well known. The tub of such household appliances is generally made of a composite material comprising a polymer matrix, such as a polypropylene matrix, reinforced with particles, such as talc or calcium carbonate particles, or with fibers, such as glass fibers.

An example of a household appliance comprising a tub as above specified is for instance disclosed in the patent application n. US 2004/123633.

An example of a household appliance comprising a polymer composite containing glass reinforced fiber is disclosed in US 2015/197881 A1.

More in detail, composite materials having a polymer matrix reinforced with glass fibers are generally used for realizing tubs intended to undergo high stresses, as the tubs of high-spin speed models of washing machines and washer/dryers, generally reaching 800 to 1600 rpm, while composite materials having a polymer matrix reinforced with talc or calcium carbonate particles are generally used for realizing tubs undergoing lower stresses, such as dishwasher tubs or lower-end models of washing machines and washer/dryers, with spin speed under 800 rpm.

Due to relative high cost of glass fibers compared to the cost of minerals particles, such as calcium carbonate and talc particles, the cost of the tubs realized with glass fibers reinforced material is about 25-30% more expensive than the cost of the tubs reinforced with minerals particles. This contributes to significantly increase the production costs of the tubs of the high-spin speed models of washing machines and washer/dryers and consequently the production costs of such washing machines and washer/dryers themselves.

The objective of the present invention is to design a household appliance, such as in particular a washing machine or a washer/dryer, comprising a tub made of a composite material having a polymer matrix which ensures the desired mechanical performances, also for the high-spin speed models, while requiring a lower production cost with respect to the materials currently available on the market to be used for the same purposes.

A further object of the present invention is to provide a process for the production of the tub of such household appliances which is easy and economical to be performed.

The household appliance designed to fulfill the object of the present invention, explicated in the first claim and the respective claims thereof, comprises a tub made of a composite material having a polymeric matrix and wherein part of the glass fibers used to reinforce it are substituted with PET fibers, thus ensuring comparable mechanical physical and chemical performances of the tub, while significantly reducing its production costs.

According to the invention, the matrix of the composite material is reinforced by the introduction of a mixture of glass fibers and the PET fibers in a percentage by weight between 25% and 40%, which are sufficient to ensure adequate mechanical properties to the composite material.

In a further embodiment, the PET fibers are present in the composite material in a percentage by weight between 5% and 30%.

In another embodiment the composite material further comprises a maleic anhydride based compatibilizer to promote interfacial adhesion between the fibers and the polymeric material of the matrix for ensuring an adequate mechanical and chemical resistance of the composite material of the tub over the time.

In an embodiment, the PET fibers are obtained from PET flakes by means of extrusion of a mixture comprising the polymeric material of the matrix, the glass fibers and the PET flakes.

In a version of this embodiment, the PET flakes are obtained from recovered material and preferably from used and disposed plastic bottles.

The process object of the present invention comprises obtaining the tub by injection molding, during which the temperature of the composite material is maintained below the melting temperature of the PET fibers, in order not to alter the shape of the latter.

In a version, the process further comprises, before the injection molding, the extrusion of a mixture comprising the polymeric material of the matrix, the glass fibers and the PET flakes for obtaining the composite material comprising the PET fibers.

In a further version, during the extrusion the temperature of the mixture is maintained between the glass transition temperature and the melting temperature of the PET, and preferably close to the melting temperature of it, for allowing the stretching of the PET flakes and the reshaping of the latter in the form of fibers.

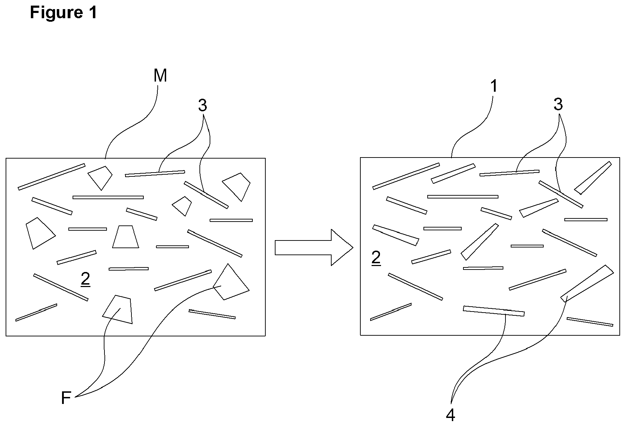

The household appliance designed to fulfill the objective of the present invention comprises a tub made of a composite material according to the attached Figure 1, wherein the composite material before and after an extrusion phase is schematically illustrated.

The elements illustrated in the figures are numbered as follows:
1. Composite material
2. Polymer material
3. Glass fibers
4. PET fibers

### F. PET flakes

### M. Mixture

The household appliance of the present invention has a tub wherein the items to be washed are placeable. More in detail, as it is known, in case the household appliance is a dishwasher it further comprises one or more baskets which are removably placed in the tub and in which the dishes to be washed, i.e. dishes, kitchenware, tableware, crockery etc. to be washed, are placed by the user. In case the household appliance is a washing machine, a dryer or a washer/dryer it further comprises a drum rotatably placed in the tub and in which the laundry to be washed and/or dried is placed by the user.

The tub of the household appliance of the present invention is made of a composite material 1 comprising a matrix of a polymeric material 2, such as for instance polypropylene, and glass fibers 3 embedded in the polymeric material 2 of the matrix.

The present invention has been in particular developed with reference to high-spin speed models of washing machines, dryers or washers/dryers, being however applicable also on dishwashers.

The glass fibers 3 confers to the composite material optimal mechanical properties, and in particular an optimal yield strength, for the tub to resist over the time to high spin speed cycles.

According to the present invention, the composite material 1 further comprises polyethylene terephthalate (PET) fibers 4 embedded in the matrix mixed with the glass fibers 3.

More in detail, part of the glass fibers 3 in the composite material constituting the tub of the household appliance according to the invention are substituted with PET fibers, thus allowing to reduce the production costs of the tub, and hence of the household appliance, while still ensuring suitable mechanical properties, and in particular suitable yield strength, of the tub also for high spin speed models.

Moreover it has been verified that the tub obtained with a composite material comprising a mixture of glass fibers 3 and PET fibers 4 has a good detergent resistance and oxidation resistance, comparable to the ones of the tubs obtained with a composite material comprising only glass fibers.

According to an embodiment, the glass fibers 3 and the PET fibers 4, i.e. the mixture thereof, are present in the composite material 1 in a percentage by weight between 25% and 40%.

The total amount of fibers above specified ensures in fact adequate mechanical properties to the tub.

In a further embodiment, the PET fibers 4 are present in the composite material 1 in a percentage by weight between 5% and 30%. The content of PET fibers 4 in the composite material 1 in the above specified range, in fact, allows to significantly reduce the production costs of the tub, without jeopardizing the performances of the tub.

According to another embodiment, the composite material 1 further comprises a maleic anhydride based compatibilizer to promote interfacial adhesion between the fibers and the polymeric material 2 of the matrix. It has in fact been verified that such compatibilizer is suitable to promote adhesion both between the glass fibers 3 and the matrix and the PET fibers 4 and the matrix. The introduction of the compatibilizer in the formulation of the composite material 1 is particularly important for conferring an optimal resistance, both mechanical and chemical, over the time to the composite material and hence to the tub realized with it.

In an embodiment, the PET fibers 4 are obtained from PET flakes F, by means of extrusion of a mixture M comprising the polymeric material 2 of the matrix, the glass fibers 3 and the PET flakes F, as schematically illustrated in the attached Figure 1. This allows to obtain the PET fibers with the desired average aspect ratio by adjusting the operational parameters of the extrusion process.

In a version of this embodiment, the PET flakes F are obtained from recovered material, i.e. from post-consumer PET. This allows both to further reduce the cost of the composite material and hence of the tub obtained with it and to reduce the environmental impact of the whole production process of the household appliance according to the present invention.

The PET flakes F might for instance be obtained from used and discarded PET packaging. In particular, according to a preferred version of this embodiment, the PET flakes F are obtained from discarded plastic bottles. The flakes obtained from PET bottles in fact has an optimal thickness which allows to easily obtain upon extrusion PET fibers with the desired aspect ratio.

It is an object of the present invention also a process for producing a tub for a household appliance as above described. The process of the invention comprises obtaining the tub from the composite material by means of injection molding. More in detail the process comprises injecting the composite material 1 in a mold for forming the tub.

According to the invention, during the injection molding of the tub, the temperature of the composite material is maintained below the melting temperature of the PET fibers, which is about 250°C. This allows to preserve the shape of the PET fibers, so that the desired mechanical features of the composite material as designed are not altered by the injection molding process for obtaining the tub.

In a version, the process comprises, before the injection molding, the extrusion of a mixture M comprising the polymeric material 2 of the matrix, the glass fibers 3 and the PET flakes F for obtaining the composite material 1 comprising the PET fibers 4. During the extrusion, the PET flakes F, which have significantly lower cost compared to the glass fibers 3, are stretched thus forming the PET fibers 4, as schematically illustrated in Figure 1. The PET fibers such obtained, which have a significantly high aspect ratio, reinforce, together with the glass fibers 3, the polymer matrix so that they improve the overall mechanical properties of the composite material. As a result, the overall cost of the composite material is reduced without significantly compromising the mechanical properties of the latter and still using an easy and economical production process.

According to a further version of the process, during the extrusion the temperature of the mixture M is maintained between the glass transition temperature and the melting temperature of PET. This allows the thermoplastic PET material of the flakes F to be softened and reshaped in the form of fibers. More in detail the temperature of the mixture during the extrusion is maintained between around 70°C and 260°C, which are respectively the glass transition temperature and the melting temperature of PET.

Preferably, in a further version of the process, during the extrusion the temperature of the mixture M is maintained close to, and below as above specified, the melting temperature. More in detail the temperature is maintained in proximity of the melting temperature of the PET, i.e. at maximum 35°C-40°C below the melting temperature.

Therefore, the PET flakes F that are added into the polymeric material 2 are softened in the extruder by setting temperature profiles of the extrusion process which are close to melting temperature of PET. In this manner the PET flakes are more easily reshaped in the form of fibers.

The household appliance and the process for producing the tub of a household appliance according to the present invention allow therefore to obtain tubs with optimal mechanical properties, suitable also for high spin speed models of washing machines and washers/dryers while significantly reducing the production costs of them.

It has in fact been verified that by partially substituting the glass fibers of the composite material used to produce the tub with PET fibers, the mechanical properties of the composite material are not jeopardize.

As an example, below are reported in Table 1 the physical properties and the results of mechanical tests conducted both on a composite material comprising a polypropylene matrix and 34%wt of glass fibers embedded in it and on a composite material comprising a polypropylene matrix 24%wt of glass fibers and 10% of PET fibers embedded in it.

**Table 1**

| | **Test standards** | **34%wt GF -PP** | **24%wt GF, 10% PETF-PP** |
|---|---|---|---|
| **Physical properties** | | | |
| **Density (g/cm3)** | ISO 1183 | 1,1602 | 1,1042 |
| **Melt flow rate (g/10')** | ISO 1133 | 2,47 | 2,15 |
| **Ash content** | ISO 3451/1 | 33,82 | 23,89 |

| **Mechanical properties** | | | |
|---|---|---|---|
| **Yield strength (MPa)** | ISO 527 | 88,00 | 72,66 |
| **Elongation at yield (%)** | ISO 527 | 3,36 | 3,11 |
| **Modulus (MPa)** | ISO 527 | 6235 | 5411 |
| **Izod impact strength (KJ/m2)** | ISO 180/1A | 12,38 | 8,21 |
| **Flexural strength (MPa)** | ISO 178 | 132,02 | 109,41 |
| **Flexural Modulus (MPa)** | ISO 178 | 6326,00 | 4830,00 |

As can be easily verified by the results reported in Table 1, the partial substitution of glass fibers with PET fibers affects the physical and mechanical properties of the composite material in a slight manner, so that the composite material such obtained is still suitable to be used for the realization of the tub of washing machines, dryers and washers/dryers characterized by high spin speed, while allowing a significant decrease in the production costs of such tubs.

## Claims

1. A household appliance having a tub wherein the items to be washed are placeable and which is made of a composite material (1) comprising a matrix of a polymeric material (2) and glass fibers (3) embedded in the polymeric material (2) and polyethylene terephthalate fibers (4) embedded in the matrix mixed with the glass fibers (3) **characterized in that** the glass fibers (3) and the polyethylene terephthalate fibers (4) are present in the composite material (1) in a percentage by weight between 25% and 40%.

2. A household appliance as in Claim 1, **characterized in that** the polyethylene terephthalate fibers (4) are present in the composite material (1) in a percentage by weight between 5% and 30%.

3. A household appliance as in any of the above claims, **characterized in that** the composite material further comprises a maleic anhydride based compatibilizer to promote interfacial adhesion between the fibers (3, 4) and the polymeric material (2) of the matrix.

## Patentansprüche

1. Ein Haushaltsgerät mit einer Wanne, der aus einem Verbundwerkstoff (1) besteht und worin die zu Waschenden Wäsche platziert werden, umfasst einen Matrix aus einem Polymermaterial (2) und Glasfasern (3), die in das Polymermaterial (2) eingebettet sind, und Polyethylenterephthalatfasern (4), die in die mit den Glasfasern (3) gemischte Matrix eingebettet sind; **gekennzeichnet ist es dadurch,** dass die Glasfasern (3) und die Polyethylenterephthalatfasern (4) in einem Gewichtsanteil zwischen 25% und 40% in dem Verbundmaterial (1) vorliegen.

2. Ein Haushaltsgerät wie in Anspruch 1 aufgeführt, **ist dadurch gekennzeichnet, dass** die Polyethylenterephthalatfasern (4) in einem Gewichtsanteil zwischen 5% und 30% im Verbundwerkstoff (1) enthalten sind.

3. Ein Haushaltsgerät, wie in einem der vorherigen Ansprüchen aufgeführt, ist **dadurch gekennzeichnet, dass** darüber hinaus das Verbundmaterial einen Verträglichkeitsvermittler auf Maleinanhydridbasis umfasst, um die Grenzflächenhaftung zwischen den Fasern (3, 4) und dem Polymermaterial (2) der Matrix zu fördern.

## Revendications

1. Un appareil électroménager comportant une cuve dans laquelle peuvent se placer les articles à laver et qui est constituée d'un matériau composite (1) comprenant une matrice d'un matériau polymère (2) et de fibres de verre (3) incorporées dans le matériau polymère (2) et des fibres de polyéthylène téréphtalate (4) incorporées dans la matrice et mélangées aux fibres de verre (3) **caractérisé en ce que** les fibres de verre (3) et les fibres de polyéthylène téréphtalate (4) sont présentes dans le matériau composite (1) dans un pourcentage en poids compris entre 25% et 40%.

2. Un appareil électroménager selon la Revendication 1, **caractérisé en ce que** les fibres de polyéthylène téréphtalate (4) sont présentes dans le matériau composite (1) dans un pourcentage en poids compris entre 5% et 30%.

3. Un appareil électroménager selon l'une quelconque des revendications précédentes, **caractérisé en ce que** le matériau composite comprend en outre un agent comptabilisant à base d'anhydride maléique destiné à favoriser l'adhérence inter faciale entre les fibres (3, 4) et le matériau polymère (2) de la matrice.
